(19) Europäisches Patentamt
European Patent Office
Office européen des brevets

(11) **EP 4 765 302 A1**

(12) **EUROPEAN PATENT APPLICATION**
published in accordance with Art. 153(4) EPC

(43) Date of publication:
**24.06.2026 Bulletin 2026/26**

(21) Application number: **24908179.5**

(22) Date of filing: **20.12.2024**

(51) International Patent Classification (IPC):
**H01M 10/0587** (2010.01)   **H01M 10/0569** (2010.01)
**H01M 50/107** (2021.01)   **H01M 50/213** (2021.01)

(52) Cooperative Patent Classification (CPC):
**H01M 10/0569; H01M 10/0587; H01M 50/107;
H01M 50/213;** Y02E 60/10; Y02P 70/50

(86) International application number:
**PCT/KR2024/020854**

(87) International publication number:
**WO 2025/135897 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.12.2023 KR 20230190459**

(71) Applicant: **LG Energy Solution, Ltd.
Seoul 07335 (KR)**

(72) Inventors:
• **SHIN, Won Kyung
Daejeon 34122 (KR)**
• **PARK, Ji Young
Daejeon 34122 (KR)**
• **BAEK, Jong Hyeon
Daejeon 34122 (KR)**
• **KIM, Jung Jin
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **LITHIUM SECONDARY BATTERY**

(57)   The present invention relates to a lithium secondary battery including a battery case, and an electrode assembly and an electrolyte accommodated in the battery case, wherein a G value, defined by Equation (1) below, is 1.8 to 3.5.

$$G = \frac{V_{CH} - V_{CO}}{V_{total} \times C} \times 100$$

Equation (1):

where, in Equation (1) above, $V_{CH}$ is a volume (unit: mL) of hydrocarbon-based gas present in the lithium secondary battery, $V_{CO}$ above is a volume (unit: mL) of carbon oxide-based gas present in the lithium secondary battery, $V_{total}$ is a total volume (unit: mL) of gas present in the lithium secondary battery, and C is a discharge capacity when the lithium secondary battery is charged and discharged at 0.33 C and a voltage ranging from 2.5 V to 4.2 V.

[FIG. 5]

EP 4 765 302 A1

**Description**

<u>**TECHNICAL FIELD**</u>

This application claims priority from Korean Patent Application No. 10-2023-0190459, filed on December 22, 2023, the disclosure of which is incorporated by reference herein.

The present invention relates to a lithium secondary battery, and more particularly, to a lithium secondary battery designed such that gas composition in the secondary battery, after formation, satisfies a particular condition.

<u>**BACKGROUND ART**</u>

With technological development of electric vehicles, mobile electronic devices, etc., demand for a lithium secondary battery is rapidly increasing as a source of energy.

The lithium secondary battery is classified into a cylindrical, prismatic, pouch-type battery according to the shape of a battery case, and among these, the cylindrical battery is formed in a way that a positive electrode, a separator, and a negative electrode in a sheet shape are sequentially laminated, then the laminate is wound in one direction to prepare an electrode assembly in a jelly-roll type, and the electrode assembly is accommodated in a cylindrical battery case, and then an upper part of the battery case is covered with a cap plate to seal the battery case. The positive electrode and the negative electrode respectively include a positive electrode tab and a negative electrode tab in a strip form, and the positive electrode tab and the negative electrode tab are connected to electrode terminals to be electrically connected to an external power. Meanwhile, a positive electrode terminal is the cap plate, and a negative electrode terminal is the battery case.

Conventionally, a small-sized cylindrical secondary battery having a form factor of 1865 (a cylindrical secondary battery of 18 mm diameter x 65 mm height) or 2170 (a cylindrical secondary battery of 21 mm diameter X 70 mm height) was mainly used, but as the increased driving distance, fast charging speed, and the like are recently demanded for electric vehicles, development and use of a large-sized cylindrical secondary battery with a larger form factor, represented by , for example, 4680 (a cylindrical secondary battery of 46 mm diameter x 80 mm height), is being considered.

Meanwhile, due to large capacity of the large-sized cylindrical secondary battery, in case of using the electrode tab in a strip form, like the conventional small-sized cylindrical secondary battery, the amount of current concentrated to the electrode tab increases, so that the resistance and heating increase, causing a problem of decreasing efficiency of current collecting. Accordingly, instead of using a separate electrode tab in a strip form, a so-called tab-less cylindrical secondary battery, wherein a current collector itself in a non-coated part of each of the positive electrode and the negative electrode is used as an electrode tab, is being suggested.

The cylindrical secondary battery having the tab-less structure not only provides relatively large capacity characteristics and energy density, but also has the advantages of improving production efficiency of the cylindrical secondary battery for electric vehicles and lowering the production cost. In addition, due to the application of the tab-less structure, while the number of components is reduced, the electrical connection (contact) area between the electrode tab and the electrode terminal may be increased and the movement distance of electrons may be reduced, so that output characteristics may be improved, and heat generated during a charging and discharging process may be distributed.

However, since the large-sized cylindrical secondary battery, applied with the tab-less structure, etc. requires a compression process for a portion not applied with an active material layer in order to provide sufficient weldability to a case and a terminal portion, a movement path of electrolyte between the positive electrode, the separator, and the negative electrode inside the wound electrode assembly is blocked to hinder proper movement of the electrolyte, causing decrease of electrolyte impregnation, and accordingly, a SEI film component, formed in a formation process, changes, and decomposition reaction of an electrolyte solvent increases during operation of a battery. Accordingly, when the large-sized cylindrical secondary battery is applied with the same electrolyte system as that of the conventional small-sized cylindrical secondary battery, it is difficult to achieve a desired electrochemical performance.

Therefore, technological development is required for implementing excellent electrochemical performance in the large-sized cylindrical secondary battery, applicable to a relevant medium and large-sized device such as a vehicle.

<u>**DISCLOSURE OF THE INVENTION**</u>

<u>**TECHNICAL PROBLEM**</u>

The present invention is to solve the above problems by providing a lithium secondary battery designed such that gas composition present in the secondary battery, after formation, satisfies a particular condition, thereby exhibiting excellent electrochemical performance.

**TECHNICAL SOLUTION**

According to an embodiment, the present invention provides a lithium secondary battery including a battery case, and an electrode assembly and an electrolyte accommodated in the battery case, wherein the electrode assembly includes a positive electrode, a negative electrode, and a separator disposed between the positive electrode and the negative electrode, the electrolyte includes a lithium salt and an organic solvent, and a G value, defined by Equation (1) below, is 1.8 to 3.5, and preferably 2.0 to 3.0.

$$\text{Equation (1):}$$

$$G = \frac{V_{CH} - V_{CO}}{V_{total} \times C} \times 100$$

In Equation (1) above, $V_{CH}$ is a volume (unit: mL) of hydrocarbon-based gas present in the lithium secondary battery after formation, $V_{CO}$ is a volume (unit: mL) of carbon oxide-based gas present in the lithium secondary battery after formation, $V_{total}$ is a total volume (unit: mL) of gas present in the lithium secondary battery after formation, and C is a discharge capacity when the lithium secondary battery is charged and discharged at 0.33 C and a voltage ranging from 2.5 V to 4.2 V.

Meanwhile, the difference between the volume of hydrocarbon-based gas and the volume of carbon oxide-based gas to the total volume of gas present in the lithium secondary battery after formation, that is, $(V_{CH} - V_{CO})/V_{total}$ may be 0.40 to 0.85, and preferably 0.45 to 0.8.

The lithium secondary battery may have a discharge capacity C of 20 Ah to 50 Ah, preferably 20 Ah to 45 Ah, and more preferably 22 Ah to 40 Ah when charged and discharged at 0.33 C and a voltage ranging from 2.5 V to 4.2 V.

Meanwhile, the lithium salt, included in the electrolyte, may include $LiPF_6$, the organic solvent may include ethylene carbonate, and the electrolyte may have an E value, defined by Equation (2) below, of 15 to 20, preferably greater than 15 and less than 18, and more preferably 15.1 to 17.9.

$$\text{Equation (2):}$$

$$E = \frac{\left( M_{EC} - A \times \left( M_{LiPF6} \times \frac{M_{EC}}{M_{Solvent}} \right) \right) \times MW_{EC}}{C} \times 100$$

In Equation (2), $M_{EC}$ is the number of moles of ethylene carbonate in the electrolyte, $M_{LiPF6}$ is the number of moles of $LiPF_6$ in the electrolyte, $M_{Solvent}$ is the total number of moles of the organic solvent in the electrolyte, $MW_{EC}$ is a molecular weight of ethylene carbonate, A is a solubility constant of $LiPF_6$ in the electrolyte, and C is a discharge capacity when the lithium secondary battery is charged and discharged at 0.33 C and a voltage ranging from 2.5 V to 4.2 V.

At this time, the number of moles $M_{EC}$ of ethylene carbonate in the electrolyte may be 0.070 to 0.090 moles, preferably 0.075 to 0.085 moles, and more preferably 0.078 to 0.085 moles, and the number of moles $M_{LiPF6}$ of $LiPF_6$ in the electrolyte may be 0.3 to 0.5 moles, preferably 0.3 to 0.4 moles, and more preferably 0.32 to 0.35 moles.

In addition, the total number of moles $M_{Solvent}$ of the organic solvent in the electrolyte may be 0.30 to 0.40 moles, preferably 0.30 to 0.38 moles, and more preferably 0.32 to 0.35 moles, and the solubility constant A of $LiPF_6$ in the electrolyte may be 3 to 4, and preferably 3.5.

Meanwhile, the lithium secondary battery may be a cylindrical battery in which a ratio of a diameter (r) to a height (h) of the battery case (form factor ratio) may be 0.4 or greater, and preferably 0.4 to 0.6, and for example, the lithium secondary battery may be a 46110 cell, a 48110 cell, a 4880 cell, or a 4680 cell.

The lithium secondary battery may include a non-coated part, in which no active material layer is formed, on at least a part of the positive electrode and the negative electrode, and the positive electrode non-coated part and the negative electrode non-coated part may each be defined as an electrode tab.

At this time, the positive electrode non-coated part and the negative electrode non-coated part may be respectively formed on end portions of one side of the positive electrode and one side of the negative electrode along a direction in which the electrode assembly is wound, a current collector plate may be bonded to each of the positive electrode non-coated part and the negative electrode non-coated part, and the current collector plate may be connected to an electrode terminal.

In addition, the positive electrode and negative electrode non-coated parts may be processed into a form of a plurality of segmented pieces capable of bending independently, at least a part of the plurality of segmented pieces may be bent toward the winding center of the electrode assembly, at least a part of the bent plurality of segmented pieces may overlap each other on an upper side and lower side of the electrode assembly, and the current collector plate may be bonded onto the overlapped plurality of segmented pieces.

According to another embodiment, the present invention provides a battery pack including the lithium secondary battery according to the present invention, previously described, as a unit cell.

## ADVANTAGEOUS EFFECTS

Since a lithium secondary battery according to the present invention is designed such that gas composition in a cell satisfies a particular condition, it may be possible to minimize the reduction in lifetime caused by decomposition and regeneration of a SEI film and a CEI film during charging and discharging and decomposition of an organic solvent in an electrolyte. Since the gas existing in the lithium secondary battery is generated from an interface reaction between an electrode and an electrolyte solution, a process of film formation and change on the electrode surface may be inferred from the composition ratio of gas. The gas composition in the lithium secondary battery satisfying the range of the present invention may mean that the films are stably formed on the surfaces of the positive electrode and negative electrode, and once the films are stably formed on the electrode surfaces, additional interface reaction between the electrode and the electrolyte solution may be suppressed during a cycle process or storing process, thereby achieving stable cell performance.

In addition, when the condition of gas composition according to the present invention is satisfied, a large-sized cylindrical battery or a battery with a tab-less structure, which has relatively low electrolyte impregnation, may also have excellent lifetime characteristics.

## BRIEF DESCRIPTION OF THE DRAWINGS

FIG. 1 is a drawing illustrating a laminated state of an electrode assembly, according to the present invention, before winding.

FIG. 2 is a cross-sectional view illustrating a structure of an electrode plate of an electrode assembly according to an embodiment of the present invention.

FIG. 3 is a drawing illustrating a structure of an electrode assembly according to an embodiment of the present invention.

FIG. 4 is a cross-sectional view illustrating a structure of a lithium secondary battery according to an embodiment of the present invention.

FIG. 5 is a cross-sectional view illustrating a structure of a lithium secondary battery according to another embodiment of the present invention.

FIG. 6 is a drawing illustrating a battery pack according to the present invention.

## MODE FOR CARRYING OUT THE INVENTION

It will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

Hereinafter, the present invention will be described in more detail.

As a result of conducting researches repeatedly for achieving excellent electrochemical performance in a large-sized battery or a battery with a tab-less structure having relatively low electrolyte impregnation, the present inventors discovered that, in case that gas composition in the secondary battery after formation satisfies a particular condition, it may be possible to minimize reduction in lifetime characteristics caused by decomposition and regeneration of a SEI film and decomposition of an organic solvent in an electrolyte during a charging and discharging process, and the present inventors have completed the present invention.

In particular, the lithium secondary battery according to the present invention may include a battery case, an electrode assembly and an electrolyte accommodated in the battery case, and a G value defined by Equation (1) below may be 1.8 to 3.5, and preferably 2.0 to 3.0.

Equation (1):

$$G = \frac{V_{CH} - V_{CO}}{V_{total} \times C} \times 100$$

In Equation (1) above, $V_{CH}$ is a volume (unit: mL) of hydrocarbon-based gas present in the lithium secondary battery after formation, and the hydrocarbon-based gas may be, for example, $CH_4$, $C_2H_6$. etc.

$V_{CO}$ is a volume (unit: mL) of carbon oxide-based gas present in the lithium secondary battery after formation, and the carbon oxide-based gas may be, for example, $CO$, $CO_2$. etc.

$V_{total}$ is a total volume (unit: mL) of gas present in the lithium secondary battery after formation.

Meanwhile, C is a discharge capacity when the lithium secondary battery is charged and discharged at 0.33 C and a voltage ranging from 2.5 V to 4.2 V, which may be 20 Ah to 50 Ah, preferably 20 Ah to 45 Ah, and more preferably 22 Ah to 40 Ah.

In the lithium secondary battery during the formation, a solvent and an additive included in an electrolyte have oxidation and reduction reactions occurred on surfaces of a positive electrode and a negative electrode, forming a solid electrolyte interphase (SEI) film and a cathode electrolyte interphase (CEI) film, which are passive-state films, on the surfaces of the positive electrode and the negative electrode. During the processes of oxidation and reduction reactions of components in the electrolyte, gas is generated, and during the formation of a negative electrode SEI film, a hydrocarbon-based gas is mainly generated, and a carbon oxide-based gas is generated during the formation of a positive electrode CEI film. Therefore, through the gas composition in the battery after the formation, the degree to which the passive-state films are formed on the surfaces of the positive electrode and the negative electrode may be estimated.

Meanwhile, if the SEI film and the CEI film are formed too little, side reactions increase on the electrolyte and the electrode surface, causing a problem of electrode deterioration and increased gas generation, resulting in reduction of lifetime characteristics, and if the SEI film and the CEI film are formed too much, there is a problem of increased electrode surface resistance. In addition, in a case where only either of the SEI film or the CEI film is formed too much or too little, the positive electrode and the negative electrode are not balanced, so that deterioration of the electrode may be accelerated, causing reduction of lifetime characteristics. Therefore, in order to achieve excellent electrochemical performance of the secondary battery, the SEI film and the CEI film need to be appropriately formed.

The degree of the SEI film and CEI film formation varies according to complex influences such as electrolyte composition, capacity of the secondary battery, and the shape of the electrode assembly or the battery, etc., which is because the degree of oxidation and reduction reactions on the surfaces of the positive electrode and the negative electrode varies according to the electrolyte composition, and wetting of the electrolyte, the reacted surface area, and the like vary according to capacity or shape of the battery. Since the degree of the SEI film and CEI film formation varies according to complex factors as described above, conventionally, it was difficult to determine the correlation between the degree of the SEI film and CEI film formation and the performance of a secondary battery.

However, as a result of repeated researches conducted by the present inventors, it is discovered that the degree of the SEI film and CEI film formation may be represented by G, which is a particular relational expression of the gas composition in the secondary battery after the formation and the battery capacity, and when the G value falls within the range of 1.8 to 3.5, electrochemical performance of the secondary battery (particularly, a large-capacity battery with low electrolyte impregnation) is significantly improved.

In particular, the G value less than 1.8 means that side reactions of positive electrode occur excessively during the formation, so that the amount of carbon oxide-based gas increases, and in this case, the resistance of positive electrode may increase to cause increased cell resistance and reduction in energy density. Meanwhile, the G value greater than 3.5 means that side reactions of negative electrode occur excessively during the formation, so that the amount of hydrocarbon-based gas increases, and in this case, deterioration of negative electrode is accelerated, so that lifetime characteristics may be reduced.

Preferably, in Equation (1) above, $(V_{CH} - V_{CO})/V_{total}$ may be 0.40 to 0.85, and particularly, 0.45 to 0.8. When the gas composition in the electrolyte falls within the above range, passive-state films of the positive electrode and the negative electrode may be appropriately formed, so that resistance characteristics and lifetime characteristics are excellent.

Meanwhile, the lithium secondary battery with the G value of Equation (1) above falling within the range of 1.8 to 3.5 may be prepared by appropriately adjusting the composition of electrolyte according to the shape of a battery case, the shape of an electrode assembly, and the battery capacity.

For example, the lithium secondary battery satisfying the G value according to the present invention may be prepared by adjusting the electrolyte composition per unit capacity such that an E value, defined by Equation (2) below, satisfies 15 to 20, preferably greater than 15 and less than 18, and more preferably 15.1 to 17.9.

Equation (2):

$$E = \frac{\left(M_{EC} - A \times \left(M_{LiPF6} \times \frac{M_{EC}}{M_{Solvent}}\right)\right) \times MW_{EC}}{C} \times 100$$

In Equation (2) above, $M_{EC}$ above is the number of moles of ethylene carbonate in the electrolyte, and is not limited thereto, but $M_{EC}$ above may be 0.070 to 0.090 moles, preferably 0.075 to 0.085 moles, and more preferably 0.078 to 0.085 moles. When the number of moles of ethylene carbonate in the electrolyte falls within the above ranges, during the formation, a stable film reaction may be induced.

$M_{LiPF6}$ above is the number of moles of $LiPF_6$ in the electrolyte, and is not limited thereto, but $M_{LiPF6}$ above may be 0.3 to 0.5 moles, preferably 0.3 to 0.4 moles, and more preferably 0.32 to 0.35 moles. When the number of moles of $LiPF_6$ in the electrolyte falls within the above ranges, a passive-state film may be stably formed during the formation, and the battery with excellent long-term durability and impregnation may be prepared. If the number of moles of $LiPF_6$ is too large, generation of a Lewis acid component such as HF may cause increasing gas generation and electrode deterioration, and the viscosity of electrolyte may increase to reduce the impregnation. Meanwhile, if the number of moles of $LiPF_6$ is too small, the proportion of free-EC which is not bound to lithium may increase in the electrolyte, causing an increase of side reactions. Ethylene carbonate with high dielectric constant is bound to Li ions while dissociating $LiPF_6$, and ethylene carbonate bound to lithium as such is referred to as a solvated EC, and ethylene carbonate not bound to Li ions is referred to as a free-EC. Due to low electrochemical stability of the free-EC, when the proportion of free-EC increases in the electrolyte, the side reaction increases. However, if the proportion of free-EC is too low, the formation of film may be negatively affected. Therefore, in order to stably form the passive-state film and to improve electrolyte impregnation and long-term durability of the battery, it is preferred to include $LiPF_6$ in the number of moles falling within the range of the present invention.

$M_{Solvent}$ is the total number of moles of the organic solvent in the electrolyte, and is not limited thereto, but $M_{Solvent}$ above may be 0.30 to 0.40 moles, preferably 0.30 to 0.38 moles, and more preferably 0.32 to 0.35 moles. When the total number of moles of the organic solvent in the electrolyte falls within the above ranges, the electrolyte viscosity and conductivity are excellent.

$MW_{EC}$ above is the molecular weight of ethylene carbonate, and is 88.06 g/mol.

A above is a solubility constant of $LiPF_6$ in the electrolyte, which may vary according to the composition of organic solvent in the electrolyte and the type and content of an additive, and in the present invention, A above may be 3 to 4, and preferably 3.5.

When the E value defined by Equation (2) above falls within the range of 15.0 to 20, the SEI film and the CEI film may be appropriately formed during the formation, and for gas composition in the secondary battery, the G value may be formed within the range of 1.8 to 3.5.

Next, each component of the lithium secondary battery according to the present invention is described in more detail.

The lithium secondary battery according to the present invention includes an electrolyte; an electrode assembly containing a positive electrode, a negative electrode, and a separator; and a battery case accommodating the electrode assembly and the electrolyte.

**Electrolyte**

The electrolyte according to the present invention includes a lithium salt containing $LiPF_6$ and an organic solvent containing ethylene carbonate.

It is preferred that the electrolyte according to the present invention is prepared by adjusting the numbers of moles of $LiPF_6$, ethylene carbonate, and the organic solvent, the type and content of an additive such that the E value of Equation (2) previously described falls within the range of 15.0 to 20.

Meanwhile, the electrolyte of the present invention may further include, as needed, at least one organic solvent of a cyclic carbonate-based organic solvent other than ethylene carbonate (EC), a linear carbonate-based organic solvent, a linear ester-based organic solvent, and a cyclic ester-based organic solvent.

The cyclic carbonate-based organic solvent is an organic solvent with high viscosity, and may include, as the representative example, at least one organic solvent selected from the group consisting of propylene carbonate (PC), 1,2-butylene carbonate, 2,3-butylene carbonate, 1,2-pentylene carbonate, 2,3-pentylene carbonate, and vinylene carbonate.

In addition, the linear carbonate-based organic solvent is an organic solvent having low viscosity and low permittivity, and may include, as the representative example, at least one organic solvent selected from the group consisting of dimethyl carbonate (DMC), diethyl carbonate (DEC), dipropyl carbonate, ethylmethyl carbonate (EMC), methyl propyl carbonate, and ethylpropyl carbonate, and particularly, may include ethylmethyl carbonate (EMC).

The linear ester-based organic solvent may include at least one organic solvent selected from the group consisting of methyl acetate, ethyl acetate, propyl acetate, methyl propionate, ethyl propionate, propyl propionate, and butyl propionate as the particular example.

The cyclic ester-based organic solvent may include at least one organic solvent selected from the group consisting of γ-butyrolactone, γ-valerolactone, γ-caprolactone, σ-valerolactone, and ε-caprolactone.

Preferably, the electrolyte according to the present invention may include ethylene carbonate and dimethyl carbonate as an organic solvent.

Meanwhile, in addition to the above electrolyte components, other additives may be further included in the electrolyte for the purpose of improving lifetime characteristics of a battery, suppressing reduction in battery capacity, improving a discharge capacity of the battery, etc.

The representative examples of the other additives may include at least one other additive selected from the group consisting of a cyclic carbonate-based compound, a halogensubstituted carbonate-based compound, a sultone-based compound, a sulfate-based compound, a borate-based compound, a nitrilebased compound, a benzene-based compound, an amine-based compound, a silane-based compound, and a lithium salt-based compound different from the lithium salt contained in the electrolyte.

In particular, the other additives may include one, or two or more compounds selected from the group consisting of vinylene carbonate (VC) , vinylethylene carbonate, fluoroethylene carbonate (FEC), 1,3-propane sultone (PS), 1,4-butane sultone, ethene sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenyl borate, lithium oxalyl difluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-flurobenzonitrile, 4-flurobenzonitrile, difluorobenzonitrile, trifluorobenzonitrile, phenylacetonitrile, 2-flurophenylacetonitrile, 4-fluorophenylacetonitrile, fluorobenzene, triethanol amine, ethylene diamine, tetravinylsilane, lithium bis (fluorosulfonyl) imide ($LiN(SO_2F)_2$, LiFSI), lithium bis(trifluoromethane sulfonyl)imide ($LiN(SO_2CF_3)_2$, LiTFSI), $LiPO_2F_2$, LiODFB, lithium bis oxalato borate ($LiB(C_2O_4)_2$, LiBOB), and $LiBF_4$.

The other additives may be included in an amount of 0.01 to 20 wt%, and preferably 0.05 to 5.0 wt% on the basis of the total weight of the electrolyte. When the amount of the other additives is less than 0.01 wt%, the effect of improvement in low-temperature output and improvement in high-temperature storage characteristics and high-temperature lifetime characteristics of a battery may be insignificant, and when the amount of the other additives is greater than 20 wt%, side reactions in the electrolyte may occur excessively during charging and discharging of the battery. In particular, when the additives for forming the SEI film are included in an excessive amount, the additive may not be sufficiently decomposed at high temperature, and may thus be present as an unreacted product or as precipitates in the electrolyte at room temperature. Accordingly, side reactions that deteriorate lifetime or resistance characteristics of the secondary battery may occur.

## Electrode Assembly

The electrode assembly according to the present invention includes a positive electrode, a negative electrode, and a separator disposed between the positive electrode and the negative electrode.

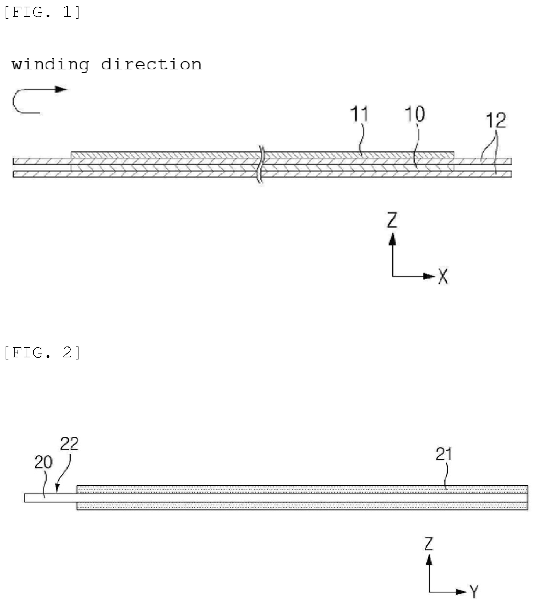

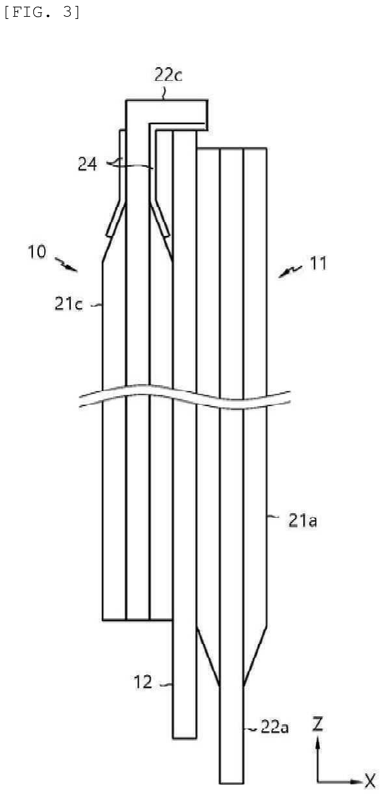

FIG. 1 illustrates a laminated structure of the electrode assembly, according to an embodiment of the present invention, before winding, FIG. 2 illustrates a cross-sectional structure of an electrode plate (positive electrode or negative electrode) according to an embodiment of the present invention, and FIG. 3 illustrates a structure of an electrode assembly according to an embodiment of the present invention.

Referring to FIG. 1 and FIG. 2, the electrode assembly A of the present invention may be prepared by laminating the separator 12, the positive electrode 10, the separator 12, and the negative electrode 11 in sequence at least once to form a laminate, and winding the laminate in one direction X.

At this time, the positive electrode 10 and the negative electrode 11 may each have a structure in which an active material layer 21 is formed on a current collector 20 in a long sheet shape, and may each include a non-coated part 22 in a partial region of the current collector 20 where the active material layer 21 is not formed.

By using the positive electrode 10 and the negative electrode 11 including the non-coated part 22 as above, it may be possible to provide a battery having a structure in which a separate electrode tab is not included, and at least a part of the non-coated part of each of the positive electrode 10 and the negative electrode 11 defines the electrode tab.

In particular, the non-coated part 22 may be formed long along the winding direction X at an end portion of one side of the current collector 20, a current collector plate may be bonded to each of the positive electrode non-coated part and the negative electrode non-coated part, and the current collector plate may be connected to an electrode terminal, and accordingly, the non-coated part may function as the electrode tab.

For example, through the following method, it may be possible to prepare a battery in which the positive electrode non-coated part and the negative electrode non-coated part function as electrode tabs. First, the separator, the positive electrode, the separator, and the negative electrode are sequentially laminated such that the non-coated part of the positive electrode and the non-coated part of the negative electrode are positioned in opposite directions from each other, and then the laminate is wound in one direction to prepare an electrode assembly in a jelly-roll type. Thereafter, the non-coated parts of the positive electrode and the negative electrode are bent in a direction of winding center C, then the current collector plate is bonded by welding to each of the non-coated part of the positive electrode and the non-coated part of the negative electrode, and the current collector plate is connected to the electrode terminal to prepare a battery. The current collector plate may have a larger unit area than that of the electrode tab in a strip type, and the resistance may be inversely proportional to the unit area of a path through which a current flows, and therefore, in case of forming the secondary battery in the above structure, cell resistance may be significantly lowered.

Meanwhile, the positive electrode and negative electrode non-coated parts may each be processed into a form of a plurality of segmented pieces capable of bending independently, and at least a part of the plurality of segmented pieces may be bent toward the winding center C of the electrode assembly.

The segmented piece may be formed by processing the positive electrode and negative electrode current collectors through a metal foil cutting process such as laser notching, ultrasonic cutting, punching, etc.

When the non-coated parts of the positive electrode and negative electrode are processed into the form of the plurality of segmented pieces, stress, applied to the non-coated part during bending, may be reduced to prevent deformation or damage on the non-coated part, and welding characteristics to the current collector plate may be improved.

The current collector plate and the non-coated part may be bonded by welding in general, and in order to improve welding characteristics, strong pressure needs to be applied to the welding region of the non-coated part, so that the non-coated part needs to be bent as flat as possible. However, in this bending process, the shape of the non-coated part may be distorted and deformed irregularly, and the deformed portion may be in contact with an electrode with the opposite polarity to cause internal short circuit or fine cracks on the non-coated part. However, if the non-coated parts of the positive electrode and negative electrode are processed into the form of the plurality of segmented pieces capable of bending independently, the stress applied to the non-coated part during the bending may be relieved, thereby minimizing the deformation and damage on the non-coated part.

In addition, in case that the non-coated part is processed into the form of the segmented pieces as above, overlapping between the plurality of segmented pieces may occur during the bending, and accordingly, welding strength to the current collector plate may increase, and when using recent technology such as laser welding, it may be possible to prevent the problem that lase penetrates into the electrode assembly and melts over the separator or active materials. Preferably, at least a part of the plurality of segmented pieces that are bent may overlap each other on the upper side and lower side of the electrode assembly, and the current collector plate may be bonded onto the overlapped plurality of segmented pieces.

Meanwhile, the electrode assembly according to the present invention may be formed in a structure in which an insulation layer 24 is additionally formed on the positive electrode 10 as illustrated in FIG. 3. In particular, the insulation layer 24 may be formed along a direction parallel to a winding direction of the electrode assembly to cover a part of a positive electrode active material layer and a part of the non-coated part.

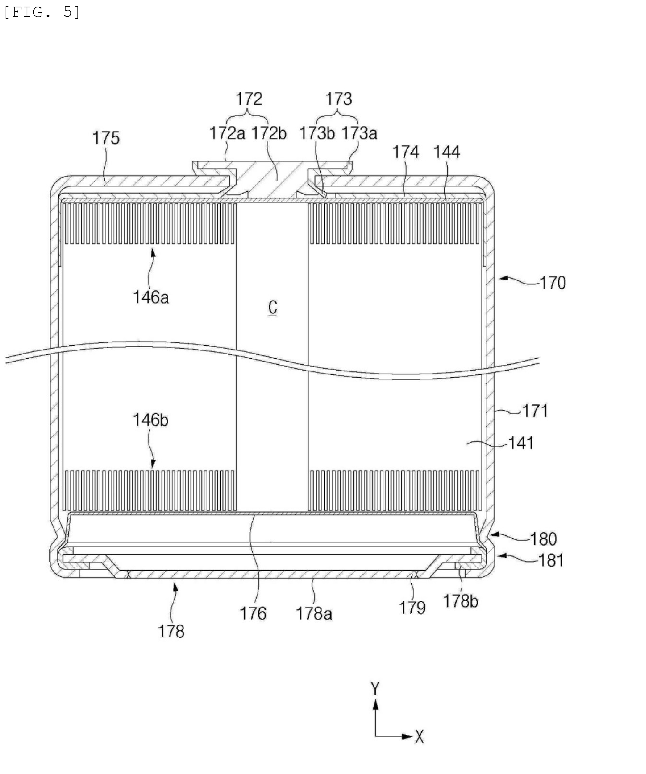

In case of the battery in a tab-less structure using the non-coated part 22c of the positive electrode 10 and the non-coated part 22a of the negative electrode 11 as electrode tabs, the electrode assembly is formed such that the positive electrode 10 protrudes from the upper part of the separator 12, and the negative electrode 11 protrudes from the lower part of the separator 12, and the protruding positive electrode 10 and/or negative electrode 11 are bent and then bonded to the current collector plate. Meanwhile, in case of bending the positive electrode 10 or the negative electrode 11 as above, the current collector of the positive electrode 10 or the negative electrode 11 may be positioned beyond the separator and close to the electrode of the opposite polarity, and accordingly, there is a possibility that the positive electrode and the negative electrode may be electrically in contact with each other, thereby causing an internal short circuit. However, as illustrated in FIG. 5, when the insulation layer 24 covering a part of the positive electrode active material layer and the non-coated part is formed, electrical contact between the positive electrode 10 and the negative electrode 11 may be prevented by the insulation layer 24, thereby preventing the short circuit from occurring inside the battery.

Preferably, the insulation layer 24 may be included on at least one side of the current collector of the positive electrode 10, and may be preferably included in both sides of the positive electrode 10.

In addition, the insulation layer 24 may be formed in a region of the positive electrode 10, which may possibly face an active material layer 21a of the negative electrode 11. For example, the insulation layer 24 may be formed by extending to the end of the non-coated part 22c on the surface of the non-coated part 22c of the positive electrode 10 which faces the negative electrode 11 after being bent. However, in case of the opposite surface of the surface facing the negative electrode 11 after being bent, it is preferred that the insulation layer 24 is formed only to a part of the non-coated part 22c, for example, to the bent point of the non-coated part 22c. This is because, in case that the insulation layer 24 is formed on the entire region of the non-coated part of the opposite surface of the surface facing the negative electrode 11, electrical contact with the current collector plate is impossible, so that the non-coated part may not function as an electrode tab.

Meanwhile, for the insulation layer 24, the material or component is not particularly limited as long as it secures insulating performance and is attachable to the positive electrode. For example, the insulation layer may be an insulation coating layer or an insulating tape, and the insulation coating layer may include an organic binder and an inorganic particle. At this time, the organic binder may be, for example, a styrene-butadiene rubber (SBR), and the inorganic particle may be an aluminum oxide, but an example is not limited thereto.

Hereinafter, each component of the electrode assembly of the present invention is described in more detail.

## Positive Electrode

The positive electrode may be prepared in a method in which a positive electrode slurry is applied onto one side or both sides of a positive electrode current collector in a long sheet shape, a solvent of the positive electrode slurry is removed through a drying process, and then rolling is performed. Meanwhile, the positive electrode including a non-coated part may be prepared in a method in which the positive electrode slurry is not applied onto a partial region of a positive electrode current collector, for example, one end portion of the positive electrode current collector during application of the positive electrode slurry.

Meanwhile, as the positive electrode current collector, various positive electrode current collectors that are used in the relevant art may be used. For example, for the positive electrode current collector, stainless steel, aluminum, nickel, titanium, calcined carbon, or aluminum or stainless steel that is surface-treated with carbon, nickel, titanium, silver, etc. may be used. The positive electrode current collector may generally have a thickness of 3 to 500 $\mu$m, and microscopic irregularities may be formed on a surface of the positive electrode current collector to improve adhesion of the positive electrode active material. The positive electrode current collector may be used in various forms, for example, a film, a sheet, a foil, a net, a porous body, a foam body, a non-woven fabric body, etc.

In addition, the positive electrode slurry may be prepared by dispersing a positive electrode active material in a solvent such as dimethyl sulfoxide (DMSO), isopropyl alcohol, N-methylpyrrolidone (NMP), acetone, or water.

For the positive electrode active material, positive electrode active materials generally used in the relevant art may be used, and the type is not particularly limited.

Preferably, the positive electrode active material may include a lithium transition metal oxide containing Ni and Co, and more preferably, may include a lithium nickel-based oxide represented by [Chemical Formula 1] below.

[Chemical Formula 1]     $Li_aNi_bCo_cM^1_dM^2_eO_2$

In Chemical Formula 1 above, $M^1$ may be Mn, Al, or a combination thereof, and preferably, Mn, or Mn and Al.

$M^2$ above may be one or more selected from the group consisting of Zr, W, Y, Ba, Ca, Ti, Mg, Ta, and Nb. A $M^2$ element is not necessarily included, but if included in an appropriate amount, it may serve to promote particle growth during calcination, or improve crystal-structure stability.

a above refers to a molar ratio of lithium in the lithium nickel-based oxide, where $0.8 \leq a \leq 1.2$, $0.85 \leq a \leq 1.15$, or $0.9 \leq a \leq 1.2$ may be satisfied. When the molar ratio of lithium falls within the above ranges, the crystal structure of the lithium nickel-based oxide may be stably formed.

b above refers to a molar ratio of nickel in the entire metal excluding lithium in the lithium nickel-based oxide, where $0.50 < b < 1$, $0.60 \leq b < 1$, $0.80 \leq b < 1$, $0.85 \leq b < 1$, or $0.90 \leq b < 1$ may be satisfied.

c above refers to a molar ratio of cobalt in the entire metal excluding lithium in the lithium nickel-based oxide, where $0 < c < 0.50$, $0 < c < 0.40$, $0 < c < 0.20$, $0 < c < 0.15$, or $0 < c < 0.10$ may be satisfied. When the molar ratio of cobalt falls within the above ranges, good resistance characteristics and output characteristics may be achieved.

d above refers to a molar ratio of a $M^1$ element among the entire metal excluding lithium in the lithium nickel-based oxide, where $0 < d < 0.50$, $0 < d < 0.40$, $0 < d < 0.20$, $0 < d < 0.15$, or $0 < d < 0.10$ may be satisfied. When the molar ratio of the $M^1$ element falls within the above ranges, structural stability of the positive electrode active material is excellent.

e above refers to a molar ratio of the $M^2$ element among the entire metal excluding lithium in the lithium nickel-based oxide, where $0 \leq e \leq 0.1$, or $0 \leq e \leq 0.05$ may be satisfied.

In particular, the lithium nickel-based oxide may be $Li(Ni_{0.60}Co_{0.10}Mn_{0.30})O_2$, $Li(Ni_{0.60}Co_{0.20}Mn_{0.20})O_2$, $Li(Ni_{0.80}Co_{0.10}Mn_{0.10})O_2$, $Li(Ni_{0.90}Mn_{0.05}Co_{0.05})O_2$, $Li(Ni_{0.94}Co_{0.04}Mn_{0.02})O_2$, $Li(Ni_{0.87}Mn_{0.07}Co_{0.04}Al_{0.02})O_2$, $Li(Ni_{0.90}Mn_{0.03}Co_{0.05}Al_{0.02})O_2$, or the like, but the example is not limited thereto.

Meanwhile, the positive electrode slurry may further include optionally at least one of a conductive material and a binder.

The conductive material is used to provide conductivity to an electrode, and any material that does not cause chemical change and conducts electrons may be used in a battery without particular limitation. Specific examples may be graphite such as natural graphite or artificial graphite; a carbon-based material including carbon black, acetylene black, ketjen black, channel black, furnace black, lamp black, thermal black, a carbon fiber, a carbon nanotube, etc.; a powder or fiber of metal including copper, nickel, aluminum, silver, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used. The conductive material may be included generally in the amount of 1 to 30 wt%, preferably 1 to 20 wt%, and more preferably 1 to 10 wt% on the basis of the total weight of the positive electrode active material layer.

The binder may serve to improve binding between positive electrode active material particles and adhesion between the positive electrode active material and the positive electrode current collector, and specific examples may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, and a styrene-isoprene rubber; a cellulose-based binder including carboxyl methyl cellulose (CMC), starch, hydroxy propyl cellulose, and regenerated cellulose; a poly alcohol-based binder including polyvinyl alcohol; a polyolefin-based binder including polyethylene and polypropylene; a polyimide-based binder; a polyester-based binder; and a silane-based binder, and one alone thereof, or a mixture of two or more thereof may be used. The binder may be included in an amount of 1 to 30 wt%, preferably 1 to 20 wt%, and more preferably 1 to 10 wt% on the basis of the total weight of the positive electrode active material layer.

**Negative Electrode**

The negative electrode may be prepared in a method in which a negative electrode slurry is applied onto one side or both sides of a negative electrode current collector in a long sheet shape, a solvent of the negative electrode slurry is removed through a drying process, and then rolling is performed. Meanwhile, the negative electrode including a non-coated part may be prepared in a method in which the negative electrode slurry is not applied onto a partial region of the negative electrode current collector, for example, one end portion of the negative electrode current collector during application of the negative electrode slurry.

Meanwhile, as the negative electrode current collector, negative electrode current collectors, generally used in the relevant art, may be used, and for example, copper, stainless steel, aluminum, nickel, titanium, calcined carbon, copper or stainless steel that is surface-treated with carbon, nickel, titanium, silver, etc., an aluminum-cadmium alloy, etc. may be used. The negative electrode current collector may generally have a thickness of 3 to 500 $\mu$m, and like the positive electrode current collector, microscopic irregularities may be formed on a surface of the current collector to strengthen binding force of the negative electrode active material. For example, the current collector may be used in various forms including a film, a sheet, a foil, a net, a porous body, a foam body, a non-woven fabric body, etc.

In addition, the negative electrode slurry may be prepared by dispersing a negative electrode active material in a solvent such as dimethyl sulfoxide (DMSO), isopropyl alcohol, N-methylpyrrolidone (NMP), acetone, or water.

As the negative electrode active material, a carbon-based negative electrode active material used in the relevant art may be used, and in addition, a silicon-based negative electrode active material may be mixed in the carbon-based negative electrode active material.

For the carbon-based active material, various carbon-based materials used in the relevant art, for example, a graphite-based material such as natural graphite, artificial graphite, and kish graphite; pyrolytic carbon, mesophase pitch based carbon fiber, meso-carbon microbeads, mesophase pitches, and high-temperature calcined carbon such as petroleum or coal tar pitch derived cokes, soft carbon, hard carbon, etc. may be used. The shape of the carbon-based material is not particularly limited, and the materials in various shapes, such as a non-shape, plate-shape, flake-shape, sphere-shape, or a fiber-shape material, may be used.

In addition, the silicon-based negative electrode active material may include one or more selected from the group consisting of, for example, silicon (Si), silicon carbide (SiC), silicon chloride, and silicon oxide (SiOx, where 0<x<2), a Si-Y alloy (where, Y above is an element selected from the group consisting of alkali metal, alkali earth metal, a Group 13 element, a Group 14 element, a transition metal, a rare earth element, and a combination thereof, and not Si.). The element Y may be selected from the group consisting of Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

Meanwhile, the carbon-based negative electrode active material and the silicon-based negative electrode active material may be included in a weight ratio of 99:1 to 95:10, preferably in a weight ratio of 99:1 to 95:5, and more preferably in a weight ratio of 97:3 to 95:5.

When the mixed ratio of the carbon-based negative electrode active material and the silicon-based negative electrode active material falls within the above ranges, volume expansion of a silicon-based compound may be suppressed, while capacity characteristics are improved, so that excellent cycle performance may be secured. If the silicon (Si)-based compound is too little, it is difficult to increase the energy density, and thus, the high capacity of a battery is difficult to achieve, and if too much, the degree of volume expansion in the negative electrode may increase, which is not desirable.

Meanwhile, the negative electrode slurry may further include optionally at least one of a conductive material and a binder.

The conductive material is used to provide conductivity to the negative electrode, and any material that does not cause chemical change and conducts electrons may be used in the battery without particular limitation. Specific examples may be graphite such as natural graphite or artificial graphite; a carbon-based material including carbon black, acetylene black, ketjen black, channel black, furnace black, lamp black, thermal black, a carbon fiber, a carbon nanotube, etc.; a powder or fiber of metal including copper, nickel, aluminum, silver, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used. The conductive material may be included generally in the amount of 1 to 30 wt%, preferably 1 to 20 wt%, and more preferably 1 to 10 wt% on the basis of the total weight of the negative electrode active material layer.

The binder serves to improve binding between negative electrode active material particles and adhesion between the negative electrode active material and the negative electrode current collector. Specific examples may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, and a styrene-isoprene rubber; a cellulose-based binder including carboxyl methyl cellulose (CMC), starch, a hydroxy propyl cellulose, and regenerated cellulose; a polyalcohol-based binder including polyvinyl alcohol; a polyolefin-based binder including polyethylene and polypropylene; a polyimide-based binder; a polyester-based binder; and a silane-based binder, and one alone thereof or a mixture of two or more thereof may be used. The binder may be included in an amount of 1 to 30 wt%, preferably 1 to 20 wt%, and more preferably 1 to 10 wt% on the basis of the total weight of the negative electrode active material layer.

### Separator

The separator separates the negative electrode and the positive electrode, and provides a movement path of lithium ions, and any separator may be used, without particular limitation, as long as it is used in a general lithium secondary battery as a separator. In particular, as the separator, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high melting point, polyethylene terephthalate fiber, etc. may also be used. Furthermore, a coated separator including a ceramic component or a polymer material may be used in order to secure heat resistance or mechanical strength.

### Lithium Secondary Battery

Hereinafter, a lithium secondary battery according to the present invention is described.

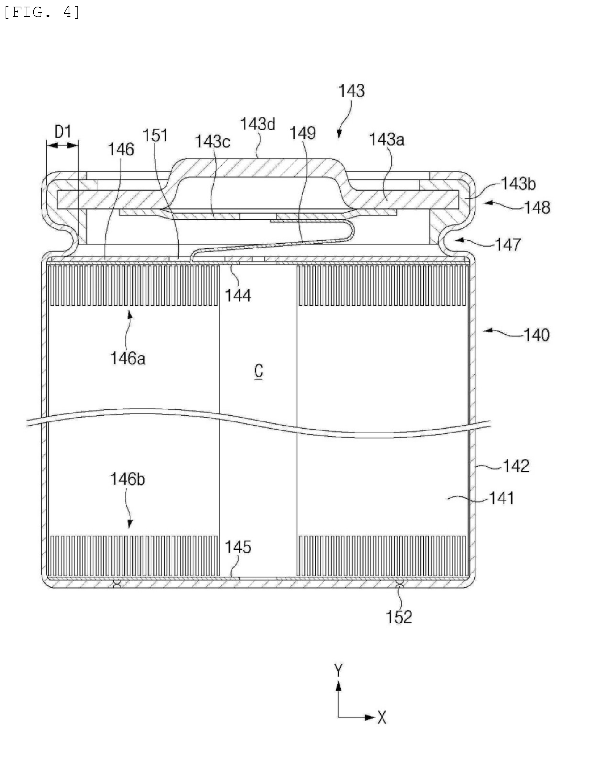

FIGS. 4 and 5 illustrate embodiments of the lithium secondary battery according to the present invention. Hereinafter, referring to FIGS. 4 and 5, the lithium secondary battery according to the present invention is described. However, FIGS. 4 and 5 only illustrate an embodiment of the present invention, and the battery structure of the present invention is not limited to the range illustrated in FIGS. 4 and 5.

FIG. 4 illustrates a cross-sectional view of a lithium secondary battery in a tab-less structure according to an embodiment of the present invention.

Referring to FIG. 4, the lithium secondary battery 140 according to the present invention includes an electrode assembly 141, a battery case 142 in which the electrode assembly 141 and an electrolyte (not show) are accommodated, and a sealing body 143 that seals an open end portion of the battery case 142.

At this time, the electrode assembly may be formed by winding a laminate of a positive electrode, a separator, and a negative electrode in one direction. In addition, the positive electrode and the negative electrode of the electrode assembly may each include a non-coated part in which an active material layer is not formed, the electrode assembly may be laminated and wound such that the positive electrode non-coated part and the negative electrode non-coated part are respectively positioned on an upper end portion and a lower end portion of the electrode assembly. Since the electrode assembly was previously described, components other than the electrode assembly will be described in the following.

Meanwhile, the battery case 142 is a can-type container with an open end portion formed on the upper side, and is made of a metal material with conductivity, such as aluminum or steel. The battery case accommodates the electrode assembly 141 in an inner space through the open end portion on the upper side, and also accommodates the electrolyte (not shown).

Meanwhile, it is preferred that the lithium secondary battery 140 of the present invention does not include a current interruption device (CID).

Meanwhile, as illustrated in FIG. 4, the battery case 142 may be electrically connected to the non-coated part 146b of the negative electrode, and may be in contact with an external power to serve as a negative electrode terminal for transmitting a current applied from the external power to the negative electrode.

As needed, a beading part 147 and a crimping part 148 may be included on the upper side of the battery case 142. The beading part 147 may be formed by press fitting the outer circumference of the battery case 142 up to a distance of D1. The beading part 147 may prevent the electrode assembly 141 accommodated inside the battery case 142 from escaping through the upper opening of the battery case 142, and may serve as a supporting part for the sealing body 143 to settle.

The crimping part 148 may be formed above the beading part 147, and has a shape extending and bent to surround the outer circumference of a cap plate 143a, disposed on the beading part 147, and a part of an upper surface of the cap plate 143a.

Next, the sealing body 143 seals the open end portion of the battery case 142, and includes the cap plate 143a, and a first gasket 143b providing air tightness between the cap plate 143a and the battery case 142 and having insulation, and as needed, the sealing body may further include a connection plate 143c electrically and mechanically coupled to the cap plate 143a. The cap plate 143a may be compressed on the beading part 147 formed on the battery case 142, and may be fixed by the crimping part 148.

The cap plate 143a is a component made of a metal material having conductivity, and covers the upper opening of the battery case 142. The cap plate 143a is electrically connected to a positive electrode of the electrode assembly 141, and is electrically insulated from the battery case 142 through the first gasket 143b. Therefore, the cap plate 143a may function as a positive electrode terminal of the lithium secondary battery. The cap plate 143a may include a protruding part 143d which is formed by protruding upward from the center part C, and the protruding part 143d may be in contact with an external power such that a current is applied from the external power.

The first gasket 143b may be disposed between the cap plate 143a and the crimping part 148 for securing airtightness of the battery case 142, and between the battery case 142 and the cap plate 143a for electrical insulation.

Meanwhile, the lithium secondary battery 140 according to the present invention may further include current collector plates 144 and 145 as needed. The current collector plates are bonded to the non-coated part 146a of the positive electrode and the non-coated part 146b of the negative electrode, and are connected to the electrode terminals (that is, positive electrode terminal and negative electrode terminal), respectively.

In particular, the cylindrical battery 140 according to the present invention may include a first current collector plate 144 bonded to an upper part of the electrode assembly 141 and a second current collector plate 145 bonded to a lower part of the electrode assembly 141.

The first current collector plate 144 and/or the second current collector plate 145 may be included further.

The first current collector plate 144 is bonded to the upper part of the electrode assembly 141. The first current collector plate 144 is made of a conductive metal material such as aluminum, copper, and nickel, and is electrically connected to the non-coated part 146a of the positive electrode. A lead 149 may be connected to the first current collector plate 144. The lead 149 may extend upward from the electrode assembly 141 to be bonded to the connection plate 143c, or may be directly bonded to a lower surface of the cap plate 143a. The bonding of the lead 149 to other components may be made through welding. Preferably, the first current collector plate 144 may be integrally formed with the lead 149. In this case, the lead 149 may have a plate shape extending from the center of the first current collector plate 144 to the outer side.

Meanwhile, the first current collector plate 144 may be bonded to an end portion of the non-coated part 146a of the positive electrode, and the bonding may be made by a method of, for example, laser welding, resistance welding, ultrasonic welding, soldering, etc.

The second current collector plate 145 is bonded to the lower part of the electrode assembly 141. The second current collector plate 145 is made of a conductive metal material such as aluminum, copper, and nickel, and is electrically connected to the non-coated part 146b of the negative electrode. One side of the second current collector plate 145 may be bonded to the non-coated part 146b of the negative electrode, and the opposite side may be bonded to an inner-side bottom surface of the battery case 142. At this time, the bonding may be made in a method including laser welding, resistance welding, ultrasonic welding, soldering, etc.

Meanwhile, the lithium secondary battery 140 according to the present invention may further include an insulator 146 as needed. The insulator 146 may be disposed to cover an upper side of the first current collector plate 144. Since the insulator 146 covers the first current collector plate 144, it may be possible to prevent the first current collector plate 144 and an inner circumference of the battery case 142 from being directly in contact with each other.

The insulator 146 includes a lead hole 151 through which the lead 149, extending upward from the first current collector plate 144, may be pulled out. The lead 149 is pulled out upward through the lead hole 151, and is bonded to the lower surface of the connection plate 143c or the lower surface of the cap plate 143a.

The insulator 146 may be made of an insulating polymer resin, for example, a polymer resin material such as polyethylene, polypropylene, polyimide, or polybutylene terephthalate.

Meanwhile, the lithium secondary battery 140 according to the present invention may further include a venting part 152 formed on the lower surface of the battery case 142, as needed. The venting part 152 corresponds to a region having a smaller thickness than a surrounding region in the lower surface of the battery case 142. Due to the small thickness, the venting part 152 is structurally vulnerable, compared to the surrounding region. Therefore, when the pressure inside the lithium secondary battery 140 rises above a certain level, the venting part 152 ruptures, and gas inside the battery case 152 is released to the outside, thereby preventing explosion of the battery.

FIG. 5 illustrates a cross-sectional view of a lithium secondary battery in a tab-less structure according to another embodiment of the present invention.

Referring to FIG. 5, a lithium secondary battery 170 according to another embodiment of the present invention has a structure of a battery case and a sealing body different from that of the lithium secondary battery 140 illustrated in FIG. 4, and constitution of an electrode assembly and an electrolyte is substantially the same as that of FIG. 4.

In particular, the lithium secondary battery 170 according to another embodiment of the present invention includes a battery case 171 having a rivet terminal 172 installed through the battery case. The rivet terminal 172 is installed on a closed surface (upper surface in the drawing), which is partially closed, of one end portion of the battery case 171. The rivet terminal 172 is riveted through a through hole (first opening of first end portion) of the battery case 171 in a state where a second gasket 173 with insulating nature is disposed. The rivet terminal 172 is exposed to the outside toward the opposite direction of the gravity direction.

The rivet terminal 172 includes a terminal exposed part 172a and a terminal inserted part 172b. The terminal exposed part 172a is exposed to the outer side of the closed surface of the battery case 171. The terminal exposed part 172a may be positioned approximately on the center of the partially closed surface of the battery case 171. The maximum diameter of the terminal exposed part 172a may be formed larger than the maximum diameter of the through hole formed in the battery case 171. The terminal inserted part 172b may pass through approximately the center of the closed surface of the battery case 171, and thus may be electrically connected to a non-coated part 146a of a positive electrode. The terminal inserted part 172b may be rivet-coupled onto the inner-side surface of the battery case 171. That is, an end portion of the terminal inserted part 172b may have a shape curved toward the inner-side surface of the battery case 171. The maximum diameter of the end portion of the terminal inserted part 172b may be larger than the maximum diameter of the through hole of the battery case 171.

A lower end surface of the terminal inserted part 172b may be welded to a first current collector plate 144 connected to the non-coated part 146a of the positive electrode. An insulating cap 174 made of an insulating material may be disposed between the first current collector plate 144 and the inner-side surface of the battery case 171. The insulating cap 174 covers an upper part of the first current collector plate 144 and an upper border portion of an electrode assembly 141. Accordingly, it may be possible to prevent an outercircumference non-coated part B3 of the electrode assembly 141 from being in contact with the inner-side surface of the battery case 171 having a different polarity to cause a short circuit. The terminal inserted part 172b of the rivet terminal 172 may pass through the insulating cap 174 to be welded to the first current collector plate 144.

The second gasket 173 is disposed between the battery case 171 and the rivet terminal 172 to prevent the battery case 171 and the rivet terminal 172 having the opposite polarities from each other from being electrically in contact. Accordingly, the upper surface of the battery case 171 having an approximately flat shape may function as a positive electrode terminal of the lithium secondary battery 170.

The second gasket 173 includes a gasket exposed part 173a and a gasket inserted part 173b. The gasket exposed part 173a is disposed between the terminal exposed part 172a of the rivet terminal 172 and the battery case 171. The gasket inserted part 173b is disposed between the terminal inserted part 172b of the rivet terminal 172 and the battery case 171. The gasket inserted part 173b may be deformed together during the riveting of the terminal inserted part 172b, and may thus be closely attached to the inner-side surface of the battery case 171. The second gasket 173 may be made of, for example, a polymer resin with insulating nature.

The gasket exposed part 173a of the second gasket 173 may have an extended shape to cover an outer circumference of the terminal exposed part 172a of the rivet terminal 172. In case the second gasket 173 covers the outer circumference of the rivet terminal 172, it may be possible to prevent a short circuit from occurring in a process of coupling an electrical connecting component, such as a busbar, to the upper surface of the battery case 171 and/or the rivet terminal 172. Although not illustrated in the drawing, the gasket exposed part 173a may have an extended shape to cover not only the outer circumference but also a part of the upper surface of the terminal exposed part 172a.

In the case where the second gasket 173 is made of a polymer resin, the second gasket 173 may be bonded to the battery case 171 and the rivet terminal 172 by heat fusion. In this case, airtightness in a bonded interface between the second gasket 173 and the rivet terminal 172, and inn a bonded interface between the second gasket 173 and the battery case 171 may be strengthened. Meanwhile, in the case where the gasket exposed part 173a of the second gasket 173 has a shape extending to the upper surface of the terminal exposed part 172a, the rivet terminal 172 may be integrally coupled to the second gasket 173 through an insert injection.

A rest region 175 of the upper surface of the battery case 171, other than the region occupied by the rivet terminal 172 and the second gasket 173, corresponds to a negative electrode terminal having the opposite polarity of that of the rivet terminal 172.

A second current collector plate 176 is bonded to the lower part of the electrode assembly 141. The second current collector plate 176 is made of a conductive metal material such as aluminum, steel, copper, and nickel, and is electrically connected to a non-coated part 146b of a negative electrode.

Preferably, the second current collector plate 176 is electrically connected to the battery case 171. For this, at least a part of a border portion of the second current collector plate 176 may be disposed and fixed between the inner-side surface of the battery case 171 and a first gasket 178b. In an embodiment, the at least a part of the border portion of the second current collector plate 176 may be fixed to a beading part 180 by welding in a state of being supported by a lower-side surface of the beading part 180 formed on the lower side of the battery case 171. In a different embodiment, the at least a part of the border portion of the second current collector plate 176 may be directly welded onto an inner wall of the battery case 171.

The second current collector plate 176 may include a plurality of irregularities (not shown) formed in all directions on a surface opposed to the non-coated part 146b. In case of the irregularities being formed, the irregularities may be press-fitted to the non-coated part 146b by pressing the second current collector plate 176.

Preferably, the second current collector plate 176 and the end portion of the non-coated part 146b may be bonded by welding, for example, by laser welding.

A sealing body 178 that seals a lower open end of the battery case 171 includes a cap plate 178a and a first gasket 178b. The first gasket 178b electrically separates the cap plate 178a and the battery case 171. A crimping part 181 fixes a border of the cap plate 178a and the first gasket 178b together. The cap plate 178a includes a vent part 179. The configuration of the vent part 179 is substantially the same as that of the embodiment previously described.

Preferably, the cap plate 178a is made of a conductive metal material. However, since the first gasket 178b is disposed between the cap plate 178a and the battery case 171, the cap plate 178a does not have electrical polarity. The sealing body 178 seals the lower open end of the battery case 171, and when the internal pressure of a battery cell 170 rises above a critical value, the sealing body 178 functions to release gas.

Preferably, the rivet terminal 172 electrically connected to the non-coated part 146a of the positive electrode is used as a positive electrode terminal. In addition, in the upper surface of the battery case 171 electrically connected to the non-coated part 146b of the negative electrode through the second current collector plate 176, a portion 175 other than the rivet terminal 172 is used as a negative electrode terminal. Accordingly, when two electrode terminals are positioned on the upper part of a lithium secondary battery, it is possible to dispose an electrical connection component, such as a busbar, only on one side of the lithium secondary battery 170. This may result in simplification of a battery pack structure and improvement of energy density. In addition, since the portion 175 used as the negative electrode terminal has an approximately flat shape, it may be possible to secure a sufficient bonding area when the electrical connection component, such as a busbar, is bonded. Accordingly, in the lithium secondary battery 170, the resistance may be decreased to a desirable level at a bonding portion of the electrical connection component.

In case of forming the lithium secondary battery in the tab-less structure as previously described, the lithium secondary battery may have less concentration of current, compared to a conventional battery including an electrode tab, so that heat inside the battery may be effectively reduced, and accordingly, effect on improving thermal safety of the battery may be achieved.

Meanwhile, the lithium secondary battery according to the present invention may be a cylindrical battery. Preferably, the cylindrical lithium secondary battery according to the present invention may be a large-sized cylindrical battery having a form factor ratio (defined as a value obtained by dividing the diameter by the height of the cylindrical battery, that is, a ratio of the diameter (T) to the height (H)) of 0.4 or greater, and preferably 0.4 to 0.6. Here, the form factor refers to a value representing the diameter and the height of the cylindrical battery.

The cylindrical battery according to the present invention may be, for example, a 46110 cell (diameter 46 mm, height 110 mm, and form factor ratio 0.418), a 48110 cell (diameter 48 mm, height 110 mm, and form factor ratio 0.436), a 4880 cell (diameter 48 mm, height 80 mm, and form factor ratio 0.600), or a 4680 cell (diameter 46 mm, height 80 mm, and form factor ratio 0.575). In the numerical value representing the form factor, the first 2 numbers refer to a diameter of the cell, and the next 2 or 3 numbers refer to a height of the cell.

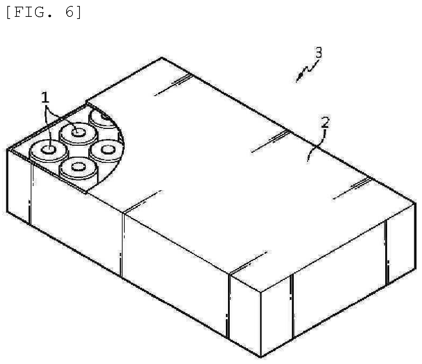

The lithium secondary battery of the present invention, previously described, may be used as a unit cell for preparing a battery pack. FIG. 6 schematically illustrates the constitution of a battery pack according to an embodiment of the present invention. Referring to FIG. 6, the battery pack 3 according to an embodiment of the present invention includes an assembly in which lithium secondary batteries 1 are electrically connected, and a pack housing 2 accommodating the assembly. The lithium secondary battery 1 is the lithium secondary battery according to the embodiment previously described. In the drawing, illustration of the components, such as a busbar, a cooling unit, and an external terminal for electrical connection of the lithium secondary batteries 1, is omitted for the convenience of drawing illustration.

The battery pack 3 may be provided to a vehicle. The vehicle may be, for example, an electric vehicle, a hybrid vehicle, or a plug-in hybrid vehicle. The vehicle includes a four-wheeled vehicle or a two-wheeled vehicle.

Hereinafter, the present invention is described in more detail through particular examples.


**Examples 1 to 2 and Comparative Examples 1 to 4**

<Preparation of Electrolyte>

$LiPF_6$ was mixed in an organic solvent including ethylene carbonate to prepare an electrolyte in the amount such that the number of moles ($M_{EC}$) of ethylene carbonate, the number of moles ($M_{LiPF6}$) of $LiPF_6$, and the number of moles ($M_{solvent}$) of the organic solvent in the electrolyte satisfy the numbers of moles listed in [Table 1] below.

<Preparation of Electrode Assembly>

A positive electrode active material, a conductive material, and a binder were added to an N-methylpyrrolidone in a weight ratio of 97.5:1.0:1.5 to prepare a positive electrode slurry. At this time, as the positive electrode active material, Li[$Ni_{0.93}Co_{0.05}Mn_{0.02}$]$O_2$ was used, and as the conductive material, carbon nanotubes were used, and as the binder, PVDF was used.
The positive electrode slurry was applied onto an aluminum current collector, and dried and then roll-pressed to prepare a positive electrode.
A negative electrode active material, a conductive material, and a binder were added to distilled water in a weight ratio of 95.0:3.5:1.5 to prepare a negative electrode slurry. At this time, as the negative electrode active material, graphite was used, as the conductive material, acetylene black was used, and as the binder, a mixture of a styrene-butadiene rubber (SBR) and carboxymethyl cellulose (CMC) was used.
The negative electrode slurry was applied onto a copper current collector, dried, and then roll-pressed to prepare a negative electrode.
A separator was disposed between the positive electrode and the negative electrode, prepared as described above, to be laminated in order of separator/positive electrode/separator/negative electrode, and then the laminate was wound to prepare an electrode assembly in a jelly-roll type.

<Preparation of Lithium Secondary Battery>

The electrode assembly was inserted into a cylindrical battery can of 46 mm diameter and 80 mm height, and then the electrolyte solution prepared as above was injected in the amount listed in [Table 1] below to prepare a 4680 cell, and then formation was performed to prepare a lithium secondary battery.
The number of moles ($M_{EC}$) of ethylene carbonate, the number of moles ($M_{LiPF6}$) of $LiPF_6$, the number of moles ($M_{solvent}$) of the organic solvent in the electrolyte, according to each of the examples and comparative examples, and an E value of Equation (2) were listed in [Table 1] below.

[Table 1]

|  | $M_{EC}$ | $M_{LiPF6}$ | $M_{solvent}$ | A | Amount of injection (g) | E |
|---|---|---|---|---|---|---|
| Example 1 | 0.083 | 0.034 | 0.341 | 3.5 | 38 | 17.4 |
| Example 2 | 0.078 | 0.033 | 0.322 | 3.5 | 36 | 15.6 |
| Comparative Example 1 | 0.092 | 0.038 | 0.379 | 3.5 | 40 | 20.1 |
| Comparative Example 2 | 0.069 | 0.029 | 0.284 | 3.5 | 40 | 15.1 |
| Comparative Example 3 | 0.080 | 0.027 | 0.332 | 3.5 | 36 | 18.0 |
| Comparative Example 4 | 0.077 | 0.036 | 0.317 | 3.5 | 36 | 15.0 |

**Experimental Example 1: Gas Composition**

Each of the lithium secondary batteries, prepared as previously described, according to the examples and comparative examples, was charged and discharged at 0.33 C and a voltage ranging from 2.5 V to 4.2 V to measure a discharge capacity C.
In addition, after the formation process was complete, the battery case was punched in a chamber of a vacuum atmosphere to release gas inside the battery and collect the gas into the vacuum chamber, and the composition of collected gas was analyzed using a gas chromatograph-flame ionization detector (GC-FID) to measure a value of $(V_{CH} - V_{CO})/V_{total}$.
Thereafter, the measured discharge capacity C and the value of $(V_{CH} - V_{CO})/V_{total}$ were substituted into Equation (1) to calculate a G value. The measurement results were listed in Table 2 below.

[Table 2]

|  | $(V_{CH} - V_{CO})/V_{total}$ | C | G |
|---|---|---|---|
| Example 1 | 0.78 | 26 | 3.0 |
| Example 2 | 0.56 | 26 | 2.2 |
| Comparative Example 1 | 0.20 | 26 | 0.8 |
| Comparative Example 2 | 0.94 | 26 | 3.6 |
| Comparative Example 3 | 0.41 | 26 | 1.6 |
| Comparative Example 4 | 0.35 | 26 | 1.4 |

**Experimental Example 2: Cell Performance Evaluation**

Initial resistance, initial energy, and capacity retention rate after 100 cycles of each of the lithium secondary batteries, prepared according to the examples and comparative examples, were evaluated as below. The evaluation results were listed in [Table 3] below.

(1) Initial DCIR: the lithium secondary battery was charged at 0.33 C to SOC 50 and then discharged at 0.5 C for 10 seconds at room temperature to measure the change amount of voltage $\Delta V$, and the measured change amount of voltage $\Delta V$ was divided by a current I to calculate the initial DCIR ($R=\Delta V/I$). The relative values of initial DCIR according to the examples and comparative examples were listed in [Table 3] below, on the basis of the value of initial DCIR (100%) of the lithium secondary battery according to Comparative Example 1.

(2) Initial energy: the lithium secondary battery was charged at 40 °C to 4.2 V, then discharged at 19.1 W to 2.5 V, and the amount of energy, obtained therefrom, was measured. The relative values of the amount of initial energy according to the examples and comparative examples were listed in [Table 3] below, on the basis of the value of the amount of initial energy (100%) of the lithium secondary battery according to Comparative Example 1.

(3) Cycle characteristics: 100 cycles of charging and discharging were performed on the lithium secondary battery, where charging at 0.5 C in a constant current-constant voltage mode until 4.2 V and then discharging at 0.5 C in a constant current mode until 2.4 V were considered 1 cycle, and then the capacity retention rate (capacity after 100 cycles to capacity after 1 cycle) was measured. The relative values of the capacity retention rates after 100 cycles according to the examples and comparative examples were listed in [Table 3] below, on the basis of the capacity retention rate (100%) of the lithium secondary battery after 100 cycles according to Comparative Example 1.

[Table 3]

|  | Initial DCIR | Initial energy | Capacity retention rate after 100 cycles |
|---|---|---|---|
| Example 1 | 98 | 104 | 115 |
| Example 2 | 99 | 103 | 112 |
| Comparative Example 1 (Ref.) | 100 | 100 | 100 |
| Comparative Example 2 | 110 | 94 | 95 |
| Comparative Example 3 | 105 | 95 | 90 |
| Comparative Example 4 | 108 | 98 | 97 |

Referring to [Table 3] above, it can be seen that the lithium secondary batteries according to Examples 1 and 2, which were designed such that the G values fall within the range of 1.8 to 3.5, had an initial DCIR, initial energy, and cycle characteristics more excellent than those of the lithium secondary batteries, according to Comparative Examples 1, 3, and 4, having G values less than 1.8 and the lithium secondary battery, according to Comparative Example 2, having a G value greater than 3.5.

**Claims**

1. A lithium secondary battery comprising:

   a battery case; and
   an electrode assembly and an electrolyte accommodated in the battery case,
   wherein the electrode assembly includes:

   a positive electrode;
   a negative electrode; and
   a separator disposed between the positive electrode and the negative electrode,

   the electrolyte includes a lithium salt and an organic solvent, and
   a G value, defined by Equation (1) below, is 1.8 to 3.5,

   Equation (1):

   $$G= \frac{V_{CH} - V_{CO}}{V_{total} \times C} \times 100$$

   where, in Equation (1) above, $V_{CH}$ is a volume (unit: mL) of hydrocarbon-based gas present in the lithium secondary battery after formation, $V_{CO}$ above is a volume (unit: mL) of carbon oxide-based gas present in the lithium secondary battery after formation, $V_{total}$ is a total volume (unit: mL) of gas present in the lithium secondary battery after formation, and C is a discharge capacity when the lithium secondary battery is charged and discharged at 0.33 C and a voltage ranging from 2.5 V to 4.2 V.

2. The lithium secondary battery of claim 1, wherein, in Equation (1) above, $(V_{CH} - V_{CO})/V_{total}$ is 0.40 to 0.85.

3. The lithium secondary battery of claim 1, wherein the discharge capacity C is 20 Ah to 50 Ah.

4. The lithium secondary battery of claim 1, wherein the lithium salt comprises $LiPF_6$, and the organic solvent comprises ethylene carbonate.

5. The lithium secondary battery of claim 4, wherein the lithium secondary battery has an E value, defined by Equation (2) below, of 14.0 to 17.5,

   Equation (2):

   $$E= \frac{\left( M_{EC} - A \times \left( M_{LiPF6} \times \frac{M_{EC}}{M_{Solvent}} \right) \right) \times MW_{EC}}{C} \times 100$$

   where, in Equation (2) above, $M_{EC}$ is a number of moles of ethylene carbonate in the electrolyte, $M_{LiPF6}$ is a number of moles of $LiPF_6$ in the electrolyte, $M_{Solvent}$ is a total number of moles of the organic solvent in the electrolyte, $MW_{EC}$ is a molecular weight of ethylene carbonate, A is a solubility constant of $LiPF_6$ in the electrolyte, and C is a discharge capacity when the lithium secondary battery is charged and discharged at 0.33 C and a voltage ranging from 2.5 V to 4.2 V.

6. The lithium secondary battery of claim 5, wherein the number of moles $M_{EC}$ of ethylene carbonate in the electrolyte is 0.070 to 0.090 moles.

7. The lithium secondary battery of claim 5, wherein the number of moles $M_{LiPF6}$ of $LiPF_6$ in the electrolyte is 0.3 to 0.5 moles.

8. The lithium secondary battery of claim 5, wherein the total number of moles $M_{Solvent}$ of the organic solvent in the electrolyte is 0.3 to 0.4 moles.

9. The lithium secondary battery of claim 5, wherein the solubility constant A of LiPF$_6$ in the electrolyte is 3 to 4.

10. The lithium secondary battery of claim 1, wherein the lithium secondary battery is a cylindrical battery in which a ratio of a diameter (r) to a height (h) of the battery case (form factor ratio) is 0.4 or greater.

11. The lithium secondary battery of claim 1, wherein the lithium secondary battery is a 46110 cell, a 48110 cell, a 4880 cell, or a 4680 cell.

12. The lithium secondary battery of claim 1, wherein the lithium secondary battery comprises a non-coated part, in which no active material layer is formed, on at least a part of the positive electrode and the negative electrode, and the positive electrode non-coated part and the negative electrode non-coated part are each defined as an electrode tab.

13. The lithium secondary battery of claim 12, wherein the positive electrode non-coated part and the negative electrode non-coated part are respectively formed on end portions of one side of the positive electrode and one side of the negative electrode along a direction in which the electrode assembly is wound, a current collector plate is bonded to each of the positive electrode non-coated part and the negative electrode non-coated part, and the current collector plate is connected to an electrode terminal.

14. The lithium secondary battery of claim 12, wherein the positive electrode and negative electrode non-coated parts are processed into a form of a plurality of segmented pieces capable of bending independently, and
at least a part of the plurality of segmented pieces is bent toward a winding center of the electrode assembly.

15. The lithium secondary battery of claim 14, wherein at least a part of the bent plurality of segmented pieces overlaps on an upper side and a lower side of the electrode assembly, and the current collector plate is bonded onto the overlapped plurality of segmented pieces.

16. A battery pack comprising the lithium secondary battery of any one of claim 1 to claim 15 as a unit cell.

[FIG. 1]

winding direction

[FIG. 2]

[FIG. 3]

[FIG. 4]

[FIG. 5]

[FIG. 6]

## INTERNATIONAL SEARCH REPORT

| International application No. |
|---|
| **PCT/KR2024/020854** |

| A. | CLASSIFICATION OF SUBJECT MATTER |
|---|---|

**H01M 10/0587**(2010.01)i; **H01M 10/0569**(2010.01)i; **H01M 50/107**(2021.01)i; **H01M 50/213**(2021.01)i

According to International Patent Classification (IPC) or to both national classification and IPC

| B. | FIELDS SEARCHED |
|---|---|

Minimum documentation searched (classification system followed by classification symbols)

H01M 10/0587(2010.01); H01M 10/0525(2010.01); H01M 10/40(2006.01); H01M 10/42(2006.01); H01M 2/26(2006.01); H01M 4/139(2010.01); H01M 4/505(2010.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 전해질(electrolyte), 활성화(activation), 가스(gas), 방전용량(discharge capacity)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2011-0118225 A (LG CHEM, LTD.) 31 October 2011 (2011-10-31)<br>See paragraphs [0078]-[0095]. | 1-4,10-16 |
| A | | 5-9 |
| Y | KR 10-2023-0147479 A (LG ENERGY SOLUTION, LTD.) 23 October 2023 (2023-10-23)<br>See paragraphs [0023]-[0168] and claim 13. | 1-4,10-16 |
| Y | JP 2001-148238 A (SONY CORP.) 29 May 2001 (2001-05-29)<br>See paragraphs [0018]-[0025] and figures 1-2. | 12-15 |
| A | KR 10-2004-0069561 A (SAMSUNG SDI CO., LTD.) 06 August 2004 (2004-08-06)<br>See claims 1-11. | 1-16 |
| A | KR 10-2023-0069519 A (LG ENERGY SOLUTION, LTD.) 19 May 2023 (2023-05-19)<br>See claims 1-11. | 1-16 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 March 2025** | **24 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/020854**

| Patent document cited in search report | | | Publication date (day/month/year) | Patent family member(s) | | | Publication date (day/month/year) |
|---|---|---|---|---|---|---|---|
| KR | 10-2011-0118225 | A | 31 October 2011 | KR | 10-1488043 | B1 | 29 January 2015 |
| KR | 10-2023-0147479 | A | 23 October 2023 | | None | | |
| JP | 2001-148238 | A | 29 May 2001 | | None | | |
| KR | 10-2004-0069561 | A | 06 August 2004 | CN | 100352083 | C | 28 November 2007 |
| | | | | CN | 1523692 | A | 25 August 2004 |
| | | | | JP | 2004-235151 | A | 19 August 2004 |
| | | | | JP | 4471344 | B2 | 02 June 2010 |
| | | | | KR | 10-0529070 | B1 | 16 November 2005 |
| | | | | US | 2004-0253517 | A1 | 16 December 2004 |
| | | | | US | 2007-0051010 | A1 | 08 March 2007 |
| | | | | US | 8313539 | B2 | 20 November 2012 |
| KR | 10-2023-0069519 | A | 19 May 2023 | | None | | |

Form PCT/ISA/210 (patent family annex) (July 2022)

**EP 4 765 302 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230190459